(19) Europäisches Patentamt
European Patent Office
Office européen des brevets

(11) **EP 4 199 330 A1**

(12) **EUROPEAN PATENT APPLICATION**

(43) Date of publication:
**21.06.2023 Bulletin 2023/25**

(21) Application number: **21215888.5**

(22) Date of filing: **20.12.2021**

(51) International Patent Classification (IPC):
*H02K 53/00* $^{(2006.01)}$    *H02K 16/00* $^{(2006.01)}$
*H02K 99/00* $^{(2014.01)}$    *H02N 11/00* $^{(2006.01)}$

(52) Cooperative Patent Classification (CPC):
**H02K 53/00;** H02K 16/00; H02K 99/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Holcomb Scientific Research Limited Dublin D07 P4AX (IE)**

(72) Inventor: **HOLCOMB, Robert Ray Sarasota, 34236 (US)**

(74) Representative: **FRKelly 27 Clyde Road Dublin D04 F838 (IE)**

(54) **DEVICES AND METHODS OF MAGNIFYING POWER OUTPUT TO POWER INPUT**

(57) The present disclosure relates to a solid-state electromagnetic generator assembly comprising a stator and a rotor, wherein the stator and the rotor each comprise a plurality of pole pieces integrally formed from a supporting structure comprising electrical steel, wherein a first end of each pole piece is attached to the supporting structure and a second end of each pole piece points outward away from the supporting structure, wherein the pole pieces include ferromagnetic and/or paramagnetic materials.

— · — Phase #1
——— Phase #2
- - - - Phase #3

Fig. 1

EP 4 199 330 A1

**Description**

FIELD OF THE INVENTION

Systems and methods for generation of an electric alternating current (AC) or direct current (DC) utilizing a solid state system of electromagnetic coils of a rotor and stator along with a sequencing method to harvest the energy from the magnetic fields created by the spin of unpaired electrons which create the magnetic domains found in ferromagnetic and paramagnetic materials. These systems and methods are also utilized in converting single-phase AC electric power to three-phase electric power, split-phase or single-phase electric power utilizing the solid-state system composed of electromagnetic coils of a solid-state rotor and stator along with one or more of a full wave rectifier, inverter and capacitor as well as simultaneously magnifying the output watts compared to the input watts by a method of harvesting the magnetic energy generated by the electron spin of the unpaired electrons of the iron atoms which constitute the electrical steel or other ferromagnetic or paramagnetic materials which are used to structure the stator and rotor.

BACKGROUND

The ever increasing need for more energy, along with the rapid depletion of the earth's fossil fuel reserves and environmental pollution of land, air and water, along with simultaneous changes in the climate make obvious the clear and urgent need for alternative energy supplies which are efficient and require no fossil fuels and are non-polluting. Developing "carbon neutral" energy sources is also considered to be highly desirable in view of these facts.

Holcomb PCT Application PCT/EP2019/076967 (A Unique Method of Harvesting Energy From The Magnetic Domains Found in Ferromagnetic and Paramagnetic Materials) describes a method and apparatus for harvesting the energy from the magnetic domains of electrical steel by aligning the magnetic pools of atomic micromagnetics formed by the spin of unpaired electrons in the material from which the energy system was made. Holcomb, Robert R. revealed in a series of patent applications systems and methods of generating AC and DC electrical power by exciting a series of magnetic rotor poles with DC electric power which was sequenced by a high speed computer system. However Holcomb did not reveal the use of three-phase AC power to excite the wound rotor coils and stator coils for generating AC three-phase, single-phase, split-phase or other phase combinations as needed.

It is therefore an objective of the present disclosure to address at least some of these challenges.

SUMMARY

Consistent with the present disclosure, systems and methods are provided for an in-line generator with a design which eliminates reverse torque along with systems and methods for harvesting the energy from the magnetic domains of ferromagnetic and paramagnetic material and particularly electrical steel, utilizing a variety of systems and methods. In addition, the present disclosure provides the following new and particularly advantageous embodiments:

1. A single-phase or polyphase true power booster or in-line power generator in which a portion of the output is transformed up by 2 volts, but not limited to 2 volts, and fed back to the utility input block. This sets up a self-sustaining loop such that the in-line power generator feeds the electrical load and feeds sufficient power back to the input such that the system takes no net power from the utility supply.

2. A solid-state phase converter for converting single-phase to three-phase electric power.

3. Graphene with side chains containing unpaired electrons laminated with carbon fibre laminates in the construction of stator and rotor laminates for super lightweight self-sustaining power generators.

Accordingly, this current disclosure involves a single-phase or polyphase true power magnifier system which functions by harvesting the energy from the magnetic domains of the electric steel or other ferromagnetic or paramagnetic materials such as graphene with side chains containing unpaired electrons.

Advantageously, this embodiment comprises an oscillating modulator complex for stabilizing voltage and increasing total power output of the unit by harvesting energy from the magnetic domains of the rotor and stator. The oscillating generator modulator may comprise a four-pole electric motor stator housing containing a rotor insert, wherein the rotor insert is wound with conductors in the winding pattern of a four-pole generator, connected on either a "high-wye" hookup, a "low-wye" hookup or a delta hookup.

Preferably, the leads from the rotor hookup of the oscillating modulator are connected with a plurality of capacitors, and the motor stator is connected in a delta to a 3-phase output load.

Advantageously, the 3-phase induced voltage and current from the rotor insert oscillates into and out of the capacitors across the leads, thereby stabilizing and doubling the output power of the unit. The unit generates real power and reactive power to stabilize and increase the power output. This additional energy originates from the pulsed alignment and the realignment of the magnetic domains of the steel. The unit power output is over twice the power input; the voltage is unchanged but the circuit output amperage is more than doubled. This phenomenon occurs because the circular interacting magnetic field lowers the impedance of the stator coils, thereby increased amperage occurs from the collapsing magnetic fields without an increase in voltage. This is a heretofore unexpected phenomenon.

According to the current disclosure of the invention, there is provided a method of generating power by using the aforementioned power magnification device, comprising the steps of:

Utilizing the 3-phase excitation AC power into the 3-phase winding of the motor stator to spin the 4 pole magnetic field at 1800 rpm. This excitation cycle generates power in the rotor core which generates in the rotor which powers the rotor capacitor load. The capacitors send rebound energy back into the stator windings thereby picking up additional energy from the repeated excitation of the magnetic domains of the electrical steel on both the stator and inner rotor.

This current disclosure also reveals a solid-state phase converter for converting single-phase to three-phase electric power at 50 or 60 Hz along with dramatic power magnification which functions by harvesting the energy from the magnetic domains of the electrical steel.

Advantageously, this embodiment comprises an oscillating modulator complex which includes a four-pole (but not limited to four-pole) electric motor stator containing a rotor insert, wherein the rotor insert is wound with conductors in the winding pattern of a four-pole generator, connected in either a 'high-wye' hookup, 'low-wye' hookup, or a delta hookup. Preferably the leads from the rotor hookup of the oscillating modulator are connected with a plurality of capacitors; and the motor stator is connected in a delta to a 3-phase output load. Preferably, the three-phase legs of the stator are connected with a plurality of capacitors placed across legs #1 to #3, #1 to #2, and #2 to #3. The input power is single-phase or split-phase 60 Hz or 50 Hz power. The two split-phase leads are placed into the stator terminal block in the phase #1 and #2 position. The output power is placed in the phase #1, #2 and #3 of the same terminal block. The third leg or the third phase is generated by the spinning magnetic poles of the two phase legs of the stator and the induced 3-phase legs of the rotor which powers the spinning magnetic field which along with the asymmetric capacitor load on the stator generates the third leg and doubles the power output over the input.

The current flowing through the rotor coils forms relatively weak magnetic poles which align the magnetic domains of the metal to form powerful moving sequenced rotating magnetic poles which generates more power from the magnetic domains than is required to align the fields. Therefore, in the invention of the present disclosure, the harvested energy from the moving magnetic fields as the domains are aligned allows more usable electric energy output than energy input for the system.

The solid state rotor of the present disclosure is virtually free of reverse torque due to five design changes when compared to the standard electric rotary generators found in the prior art:

1. The rotor of the solid state system has no moving parts;
2. The rotor does not rotate in the stator cavity;
3. The magnetic poles rotate in proper frequency and sequence to generate the desired electric power output;
4. The solid state rotor can be used to retrofit any standard generator, single-phase, two-phase or three-phase;
5. Rotors and stators can be radially laminated to improve power and efficiency.

On November 17, 2017 Dr. Robert R. Holcomb filed a patent application in the European Patent Office (EPO) titled "Solid-State Multi-Pole and Uni-Pole Electric Generator Rotor for AC/DC Electric Generators" in which he described the use of a static rotor with a rotating magnetic field. This disclosure described the use of this device for the elimination of reverse torque or back EMF. It also described the efficiency performance as being apparently greater than 1 (>1). This finding allowed the generator to operate in a self-sustained fashion. The disclosure did not explain the mechanism of input energy to allow an output of more energy than the apparent input energy. This mechanism was addressed in a later disclosure, (A Unique Method of Harvesting from the Magnetic Domains Found in Ferromagnetic and Paramagnetic Materials, a PCT Application PCT/EP2019/076967). The input to output energy does balance when the energy harvested from the magnetic domains of the ferromagnetic material of the electrical steel is put into the energy equation.

The device in the present disclosure which generates the rotating magnetic field is referred to as a rotor even though it does not rotate, it emits a rotating magnetic field in the form of distinct magnetic poles, therefore it will be referred to herein as a rotor.

The system of the present disclosure does not conform to the classical definition of an electric power generator (Webster Dictionary Definition of Electric Generator: 'A machine by which mechanical energy is changed into electrical energy'). The classical generator operates by using a main driver to produce mechanical energy which spins a magnetized rotor. The magnetic flux from the rotor pushes electrons through the stator coils and out to the electric load. The present disclosure generates and propagates a polar magnetic field, the flux from which pushes electrons through the stator coils out to an electric load. The magnetic field rotates but the physical member (the rotor) which generates the magnetic poles remains static. Therefore, since this system does not conform to the classical definition of any existing electric power generating system, it shall hereafter be referred to as "The Holcomb Energy System" (HES).

Embodiments consistent with the present disclosure include systems and methods for one or more electric generator rotors which may be solid-state and may provide the majority of the magnetic flux required to excite the stator and/or the stator excites the stator and the rotor. The poles of the present disclosure are excited by a relatively weak electromagnetic pole. When these poles are excited by the relatively weak electromagnetic fields emanating from the stator and/or rotor, these weak fields align the magnetic domains of the electrical steel in a single direction. The magnetic domains are formed by the electron spin of unpaired electrons of the atoms of the electrical steel or other suitable material. Therefore, the majority of the energy to run this solid-state generator is contributed by the electron spin of unpaired electrons which form magnetic domains and are aligned by the relatively weak fields of the electromagnetic coils. As these domains are coming into alignment they produce a very strong moving magnetic flux which induces the voltage and current flow in the stator coils and/or rotors.

These ferromagnetic and paramagnetic materials produce atomic moments that exhibit very strong interactions. These interactions are produced by electronic exchange forces and result in a parallel or anti-parallel alignment of the atomic moments. Exchange forces are very large, equivalent to a field on the order of 1,000 Tesla or approximately 100 million times the strength of the earth's magnetic field. The saturation magnetization of materials is the maximum induced magnetic moment that can be obtained in a magnetic field (H.sat). Beyond this saturation point the field, further increases in the weak aligning magnetic field will not yield further increase in magnetization. Saturation occurs when all of the available magnetic domains have been aligned. Ferromagnetic materials exhibit parallel alignment of magnetic moments resulting in large net magnetization even in the presence of relatively weak electromagnetic poles which are bringing about the alignments.

In accordance with some exemplary embodiments, a system is provided for generating power by removal of reverse torque. Reverse torque accounts for about 80% of the load in a standard generator and this load must be overcome by the prime mover. The in-line power generator of the present disclosure is solid-state and the moving magnetic flux is provided by the progressive and evolving alignment of magnetic domains within the rotor electrical steel poles, therefore it is very efficient. The only power required to operate the generator is that which is necessary to excite the weak magnetic poles which are responsible for aligning the rotor and/or stator magnetic pole domains. Therefore, the generator operates with a complete energy balance.

1 kW input power (alignment) + 3 kW from the magnetic domains

↓

4.0 kW output power

The above summary equation accounts for all of the significant energy of the system and the input and output energy is completely balanced.

For example, a solid-state electromagnetic rotor, consistent with the present disclosure, may include a plurality of pole pieces arranged around a supporting structure wherein a first end of each pole piece is attached to the support structure and a second end of each pole piece points outward or inward away from the supporting structure and wires are wound around each pole piece such that when the wires of the plurality of pole pieces are sequentially excited by an excitation circuit, the pole pieces are energized by a relatively weak electrical current which provides a relatively weak magnetic pole which in turn aligns the magnetic domains of the poles thereby providing a strong moving polar magnetic field in the form of distinct magnetic poles as desired to accomplish power generation.

In accordance with an aspect, a method is disclosed for removing reverse torque from a rotary electric generator that includes replacement of the conventional dipole or multipole spinning rotor with a unipole, dipole or multipole static solid-state rotor and/or stator which creates distinct rotating magnetic poles. These magnetic poles are generated by exciting the wires wrapped around the electrical steel of the poles. The relatively weak magnetic poles created by the electrical excitation aligns the magnetic domains of the electrical steel or other suitable materials. The powerful moving field created by aligning the magnetic domains generates electric power without rotating the physical rotor body. Since the rotor does not physically rotate, there is no energy consuming interaction between the rotor poles and the magnetic poles induced in the stator piece or vice-versa as the generator is connected to an electric load. Nor does the generator require energy to spin a rotor at the proper speed required to maintain the desired frequency. The majority of the input magnetic energy evolves from alignment of the magnetic domains of the metal poles.

The current disclosure is designed to harvest relatively unlimited amounts of electric energy from ferromagnetic and paramagnetic materials. The current disclosure is a redesign of the electric in-line power generator in the form of a solid-state rotary but not limited to rotary power generator. This design eliminates reverse torque found in electric power generators and taps into the power of the magnetic domains of electrical steel (but not confined to electrical steel) as an energy source to power the generator. In the case of electrical steel of the present disclosure, the ratio of magnetic permeability $\mu$ (H/M) of air is $1.2567 \times 10^{-6}$ H/M and the magnetic permeability of electrical steel is $5.0 \times 10^{-3}$ H/M. Therefore the relative permeability of electrical steel compared to air is 4,000 max. $\mu/\mu_0$. Electromagnetic permeability of a material is related to the number of magnetic domains per unit volume of the material.

A magnetic domain is a region within a paramagnetic or ferromagnetic material in which the magnetization is a uniform direction. This means that the individual magnetic moments of the atoms are aligned with one another. The regions separating the domains are called domain walls, where the induced magnetization rotates coherently from the direction in one domain to that in the next domain. These domains are maligned and aligned upon application of a relatively weak magnetic field.

In the current disclosure the electromagnetic poles are formed by the polar direction of the domains being aligned by the relatively weak magnetic fields of the magnetic coil of the standing poles. As the domains are aligned the power of the moving magnetic field evolves primarily from the aligned domains which are formed by the electron spin of atoms in the metal or other appropriate material. Therefore the energy used to power this electric power generating machine is provided by the unpaired electron spin of the atoms making up the ferromagnetic, paramagnetic or other appropriate material which make up the standing poles. The factors which affect the apparent strength of an electromagnet are:

1. Number of turns on the coil of wire which are wrapped around the core.
2. Strength of the current applied to the coil.
3. The material of the core making up the density of the magnetic domains.

This is related to the relative number of magnetic domains per unit volume. The generator maintains the same 100% output.

In the case of the present disclosure the majority of the input energy to power the generator is contributed by the peculiar electron spin pattern of the ferromagnetic metal or other suitable material used in constructing the generator rotor and stator. The material with high magnetic flux permeability has a large number of magnetic domains as compared to materials of low magnetic permeability.

This system generates electric power according to Faraday's Law. The induced voltage in a coil is proportional to the product of its number of loops, the cross-section area of each loop, and the rate at which the magnetic field changes within those loops as well as the flux density of the changing fields.

In the current disclosure, the rotor is static, i.e. non-rotating, and therefore reverse torque (back EMF) is not an issue. The induced pole in the stator and/or rotor is induced by the current flow in the stator coils. The excited coil aligns the magnetic domains of the pole and the moving magnetic field is formed as the magnetic domains are aligned. The magnetic domains provide the moving flux density to induce the voltage and current in the stator and/or rotor.

Before explaining certain embodiments of the present disclosure in detail, it is to be understood that the disclosure is not limited to the arrangements of the components set forth in the following description or illustrated in the drawings. The disclosure is capable of embodiments in addition to those described and of being practiced and carried out in various ways. Also, it is to be understood that the phraseology and terminology employed herein, as well as in the abstract, are for the purpose of description and should not be regarded as limiting.

As such, those skilled in the art will appreciate that the conception and features upon which this disclosure is based may readily be utilized as a basis for designing other structures, methods, and systems for carrying out the several purposes of the present disclosure. Furthermore, the claims should be regarded as including such equivalent constructions insofar as they do not depart from the spirit and scope of the present disclosure.

According to an aspect of the present disclosure, there is provided a solid-state electromagnetic generator assembly comprising a stator and a rotor, wherein the stator and the rotor each comprise:

a plurality of pole pieces integrally formed from a supporting structure comprising electrical steel, wherein a first end of each pole piece is attached to the supporting structure and a second end of each pole piece points outward away from the supporting structure, wherein the pole pieces include ferromagnetic and/or paramagnetic materials;

a plurality of wires wound around each pole piece; and

an excitation circuit configured to provide a current to the wires according to a predefined sequence to align magnetic domains of the wound pole pieces to produce a magnetic flux field, such that the current provided to the wires according to the predefined sequence provides a moving polar magnetic field in the form of distinct magnetic poles as needed to accomplish power generation, wherein the wires are configured to direct energy generated to capacitors for storage therein and to feed the energy back into the wires wrapped around the pole pieces of the rotor which magnifies the power fed back to the outer wires wrapped around the pole pieces of the stator and out to an electric load, and wherein the field strength of the moving polar magnetic field is proportional to the density of the magnetic domains of the pole piece material of the stator and the rotor;

wherein the current for the excitation circuit is provided by polyphase power fed into the terminals of the stator from a utility or alternative power source, and the polyphase power induces rotation of a four-pole magnetic field, whereby the spinning four magnetic poles excite the pole pieces of the stator and the rotor and the wires.

Advantageously, the output amperage is more than double the input amperage due to a decrease in impedance of the circuit coils secondary to the interacting magnetic fields of the stator and rotor.

Optionally, the capacitors are arranged across the leads of the stator and the rotor such that sufficient reactive power is generated to maintain a stable voltage to push the energy generated to the electrical load.

Optionally, the stator and the rotor comprise laminates comprising graphene with side chains containing unpaired electrons laminated with carbon fibre laminates.

According to a further aspect of the present disclosure, there is provided a power generator comprising the solid-state electromagnetic generator assembly of any of the preceding claims, and further comprising:

an electric power generator stator having a stator housing; and

wherein the solid-state electromagnetic rotor is disposed in or around the stator housing, and is attached to the stator housing, such that the magnetic flux field generated by the solid-state electromagnetic stator excites the solid-state electromagnetic rotor and produces electricity in both and the resulting current flowing in the wires wrapped around the pole pieces of the rotor and stator align the magnetic domains of the pole piece material in both the stator and the rotor;

wherein the action of the generator functions as an electron pump generating additional electricity which flows out to an electric load through the stator terminal block, thereby putting out multiple times more power than the input.

Advantageously, the four-pole rotating magnetic field generates 3-phase voltage in the rotor insert.

Optionally, the power generator further comprises an oscillating modulator for stabilizing voltage and increasing power output of the power generator, said oscillating modulator comprising:
the stator housing containing the rotor insert, wherein the stator housing comprises a four-pole electric motor stator housing but not limited to four poles, and wherein the rotor insert is wound with conductors in the winding pattern of a four-pole generator, connected in either a "high-wye" hookup, a "low-wye" hookup or a "delta" hookup.

Optionally, leads from the rotor hook-up of the oscillating modulator are connected with a plurality of capacitors; and terminals of the motor stator are connected to a three-phase power input and a three-phase power output to an electric load; and a series of capacitors across the rotor leads and the motor-stator leads provides reactive power to support output voltage to the load.

Advantageously, the reactive power provided by the arrangement of the capacitors is in the range of 5 Kvar to 10 Kvar.

Advantageously, the 3-phase voltage and current from the rotor oscillates into and out of the capacitors across the leads, thereby stabilizing and increasing the power output of the in-line power generator.

Advantageously, the power magnification effect comes from energy harvested from the magnetic domains of the ferromagnetic material from which it is constructed at the same instant of lowering the circuit impedance.

Advantageously, the input power rotates a four-pole magnetic field at 1800 rpm in the case of 60 Hz or 1500 rpm in the case of 50 Hz, wherein the two input power leads are connected to the three-phase output terminal block in a "wye" or "delta" hookup, and the output power is connected to the same terminal block as the input power.

Advantageously, the input power excites the pole piece material of the stator with spinning magnetic poles which in turn excite the rotor and induces spinning magnetic poles in the pole piece material of the rotor which generates a current in the wire wound around the rotor, and the wires are configured such that the current induced in the wires flows into the capacitors and the capacitors feed back into the wires wrapped around the rotor which increases the magnetic flux in the pole piece material of the rotor which further excites the wires wrapped around the stator and the pole piece material of the stator thereby increasing the output to an electric load by increasing the amperage output and maintaining a stable voltage.

Optionally, the magnetic domains are repeatedly aligned and relaxed in a cyclic fashion, thereby each cycle the generator generates four times more power than it takes to excite the wires with the input power. For example, the magnetic poles of both the stator and the rotor relax and are excited again twice per cycle. The unit may magnify the power input up to four times more output than input and generates a third phase leg thereby converting single phase or split phase power to three-phase power.

Advantageously, the source of power for the generator may be an electric power grid. The generator may magnify the power output up to 4 times more than the power input, thereby allowing the generator to feed power back to the source at a higher voltage and thereby set up a self-sustaining power loop and consume no net power from the electric power grid, such that the power grid serves merely as an interface.

BRIEF DESCRIPTION OF THE DRAWINGS

FIG 1 is a diagram illustrating an end view projection of an oscillating modulator in-line power generator phase converter laminate with three of the phase windings in place, according to an embodiment of the present disclosure.

FIG 2 is a diagram illustrating a base winding pattern of an oscillating modulator in-line power generator phase converter, consistent with embodiments of the present disclosure.

FIG 3 is a diagram illustrating a stator of an oscillating modulator in-line power generator phase converter fully wound and prepared for assembly with the rotor, consistent with the embodiment of the present disclosure.

FIG 4 is a diagram illustrating rotor laminates of an oscillating modulator in-line power generator phase converter pressed and prepared to be wound, consistent with the embodiment of the present disclosure.

FIG 5 is a diagram illustrating rotor laminates of an oscillating modulator in-line power generator phase converter fully wound and prepared to be placed into the stator, consistent with embodiments of the present disclosure.

FIG 6 is a diagram illustrating a stator rotor hook-up of an oscillating modulator in-line power generator phase converter, consistent with the embodiment of the present disclosure.

FIG 7 is a left oblique line drawing of a 75 kW in-line power generator of the present disclosure.

FIG 8 is a right oblique line drawing of a 75 kW in-line power generator of the present disclosure.

FIG 9 is a front view line drawing of a 75 kW in-line power generator of the present disclosure.

FIG 10 is a left oblique view of a 30 kW phase converter (single-phase to three-phase) of the present disclosure.

FIG 11 is a line drawing of the components of the 75 kW 3-phase modulator in-line power generator of the present disclosure.

FIG 12 is an in-line drawing of the main control panel of the 75 kW 3-phase modulator in-line power generator of the present disclosure.

FIG 13 is a line drawing of the reactive load - power capacitor system of the in-line power generator of the present disclosure.

FIG 14 is a line drawing of the test system of the 3-phase modulator in-line power generator with reactive power generation of the present disclosure.

FIG 15 is a line drawing of an in-line power generator schematic of the in-line reactive power modulator of the present disclosure.

FIG 16 is a line drawing of the phase converter in-line power generator control circuit schematic of the present disclosure.

FIG 17 is a line drawing of a schematic diagram of the physical layout of the phase converter in-line power generator of the present disclosure.

FIG 18 is a schematic diagram of the phase converter in-line power generator of the present disclosure.

FIG 19 is a schematic diagram of the phase converter in-line power generator of the present disclosure with a self-sustaining loop which sends power from the output of the stator back to the input at a higher voltage than the input.

DETAILED DESCRIPTION OF THE DRAWINGS

Embodiments explained herein include systems and methods. Some of these methods revealed herein may be executed by several embodiments of the present disclosure. Several systems consistent with the present disclosure may include at least one rotor and one stator, or the system may include multiple rotors and multiple stators. Embodiments of the present disclosure may alone or in the cumulative accomplish the purpose of the unique method of harvesting an abundance of usable electric energy from the magnetic domains of the ferromagnetic and paramagnetic materials such as electrical steel but not limited to electrical steel. For example, various exemplary embodiments are discussed and described herein involving an aspect of an electric machine such as a generator which utilizes relatively weak magnetic fields to align the magnetic domains of the ferromagnetic and paramagnetic materials used to construct rotor poles and stator irons. In the present disclosure, the electromagnetic fields of the rotor align in direction and evolve in strength as the magnetic domains of the ferromagnetic and paramagnetic materials are aligned by the relatively weak fields of the magnetic coils. As the domains are aligned the power of the moving magnetic fields evolve primarily from the aligned domains which derive their energy from the electron spin of the metals of the ferromagnetic and paramagnetic materials. Magnetic domain is a region within a magnetic material in which the magnetization is in a uniform direction. This means that the individual magnetic moments of the atom are aligned with one another. The regions separating the domains are called domain walls, wherein induced magnetization fields such as produced by the polar coils of the present disclosure rotates coherently from the direction in one domain to that in the next domain such that the domains may align when they are exposed to the fields of the relatively weak magnetic coils. In the case of the electrical steel of the present disclosure, the ratio of magnetic permeability $\mu$ (H/M) of air is 1.2567 x 10$^{-6}$ H/M and the magnetic permeability of electrical steel is 5.0 x 10$^{-3}$ H/M. Therefore, the relative permeability of electrical steel compared to air is 4,000 max. $\mu/\mu 0$. Therefore the present disclosure in part or in whole allows the ability to harvest energy from ferromagnetic and/or paramagnetic materials with relatively small amounts of energy input. The ferromagnetic and paramagnetic materials provide an energy source much like photons from the sun.

Embodiments of the present disclosure provide numerous advantages over prior systems and methods for example; various exemplary embodiments are discussed and described herein involving aspects of an electrical machine such as a generator that produces power with high efficiency and no reverse torque or electromagnetic drag. The relevance of elimination of the drag to its uses and applications along with the use of super conductor coils is presented and discussed. For example, embodiments of the present disclosure provide systems and methods for a generator design virtually free of reverse torque due to five design changes when compared to a conventional rotary generator.

These changes are explained next. The solid-state static stator and rotor disclosed herein allows the generator rotors to be operated in any embodiment or design of generator stator. It allows the magnetic poles of the rotor and stator to be rotated at any speed without back EMF or reverse torque because the rotor does not spin, only the magnetic poles spin.

In accordance with embodiments of the present disclosure, a method is disclosed for removing reverse torque from a rotary electric generator that includes replacement of the conventional dipole or spinning multipole with a unipole, dipole or multipole solid-state rotor or a series of rotors structured with layers of stator structures which creates rotating magnetic poles and generates electric power. Since the rotor and stator is stationary there is no energy consuming interaction between the induced magnetic poles formed in a stator piece when the generator is connected to an electric load, nor does the generator require energy to spin a rotor at a proper frequency.

Removal of the reverse torque allows an AC or DC generator to operate with 400% - 500% increased efficiency by this design change alone. The removal of reverse torque may be due to geometric isolation or solid-state technology. The solid-state machine of the current disclosure removes reverse torque by developing a solid-state excited and controlled by the 3-phase (not limited to 3-phase) electric power generator made of materials with maximum magnetic permeability. The majority of the input energy which produces output power is contributed by the peculiar electron spin pattern of the electrical steel or other ferromagnetic or paramagnetic materials of the generator. The material with high magnetic permeability has a large number of magnetic domains as compared to materials of low magnetic permeability.

It will be understood that a variety of materials are envisaged as being feasible alternatives to those expressed in the exemplary embodiments. For example, the windings wrapped around the salient poles may be copper but may alternatively be another sufficiently conducting material such as but not limited to graphene. What is more, various dimensions of said materials are envisaged as being feasible. For example, the windings may be #18 American Wire Gauge, but not limited to #18 American Wire Gauge. Removal of the reverse torque allows an AC or DC generator to operate with 400% - 500% increased efficiency by this design change alone. The removal of reverse torque may be due to geometric isolation or solid-state technology. The solid-state machine of the current disclosure removes reverse torque by developing a solid-state computer controlled electric power generator made of materials with maximum magnetic permeability. The majority of the input energy which produces output power is contributed by the peculiar electron spin pattern of the electrical steel or other ferromagnetic or paramagnetic materials of the generator. The material with high magnetic permeability has a large number of magnetic domains as compared to materials of low magnetic permeability.

It will be understood that a variety of materials are envisaged as being feasible alternatives to those expressed in the exemplary embodiments. For example, the windings wrapped around the salient poles may be copper but may alternatively be another sufficiently conducting material such as but not limited to graphene. What is more, various dimensions of said materials are envisaged as being feasible. For example, the windings may be #18 American Wire Gauge copper magnet wire, but may alternatively possess other dimensions and/or may be made of a different material. Indeed, the dimensions and compositions of materials discussed in the present disclosure are by way of example only, and should not be construed as being limiting.

Reference will now be made in detail to the exemplary embodiments implemented according to the disclosure, the examples of which are illustrated in the accompanying drawing.

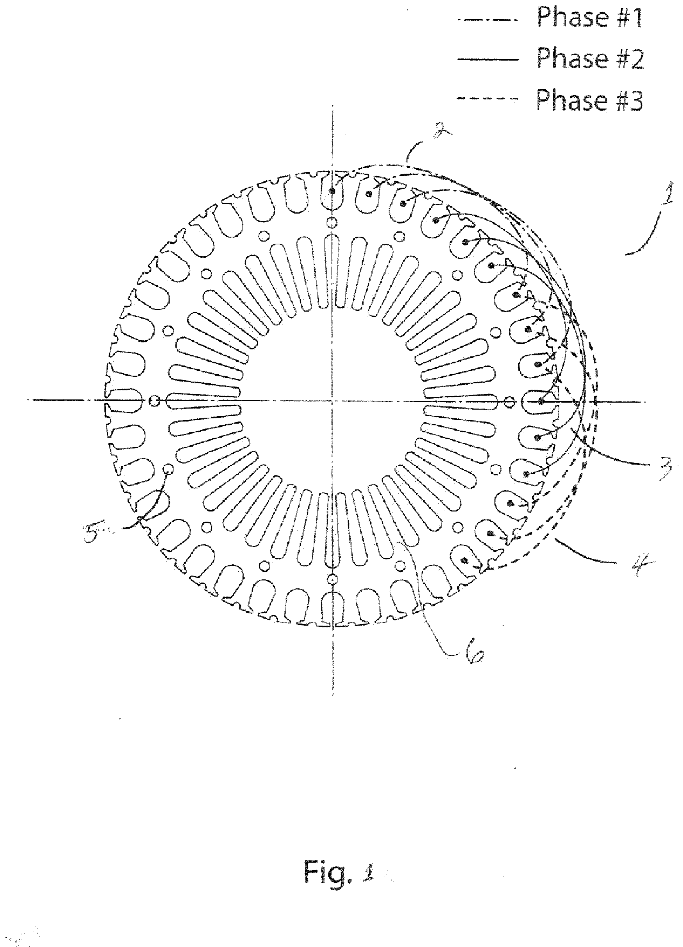

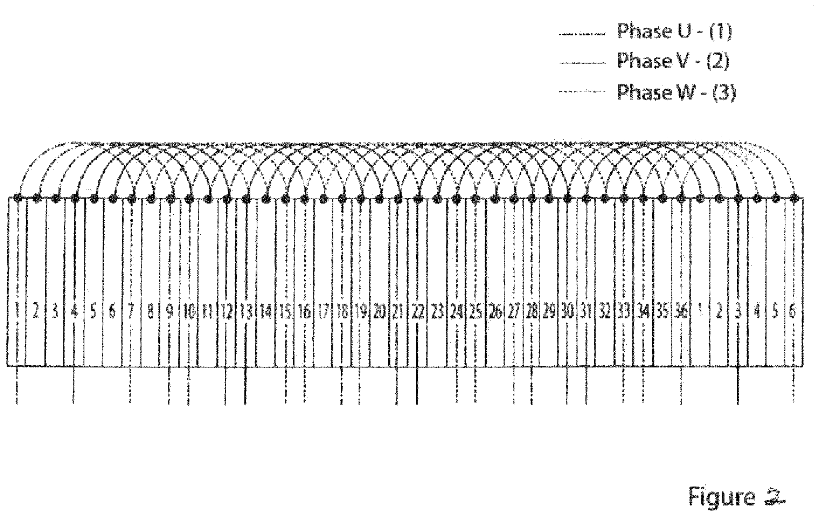

FIG. 1 is a diagram illustrating an end view projection of an oscillating modulator in-line power generator phase converter laminate 1 with three of the phase winding coils 2; 3; and 4 in place consistent with embodiments of the present disclosure. In the case of a rotary generator in common use today at operating speed the rotor exerts a flywheel effect to stabilize the voltage and enhance the power output by generating real power and reactive power. The reactive power stabilizes the voltage. In the case of the present disclosure the modulator 1 serves the function of the rotor/flywheel effect. The modulator coil is constructed by pressing laminates of the present Figure which may be made up of 0.34mm (but not limited to 0.34mm) of electrical steel under the appropriate pressure. While under the appropriate pressure, fastening members such as torque bolts may be applied through retention holes 5. After insulating the modulator laminate 1, the slot coils 2; 3; 4 are laid in place. The slot coils 2; 3; 4 may be made of #18 AWG insulated copper magnet wire, but not limited to #18 AWG insulated copper magnet wire. In the exemplary embodiment there are 12 coil groups which are wound 5 in hand and 9 turns with a span of 1 - 7 in 36 slots, but not limited to 12 groups of coils, 5 in hand, 9 turns and a span of 1 - 7 in 36 slots. The hookup is in a 4-pole "high wye" stator hookup but may be "low wye" or delta. Variable capacitor loads are connected across L1 - L2, L2 - L3, and L1 - L3. Capacitors of variable loads are also across L1 - Neutral, L2 - Neutral and L3 - Neutral. The coil winding and labelled leads are illustrated in **FIG. 2.** Specifically, a span of 1-7 is illustrated as the exemplary embodiment.

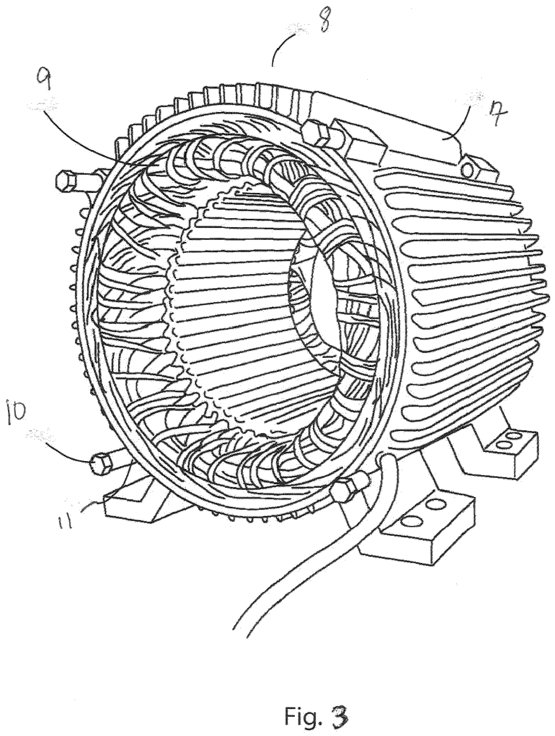

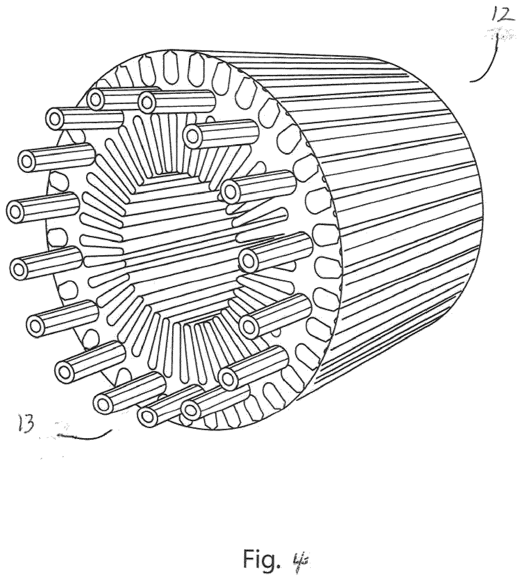

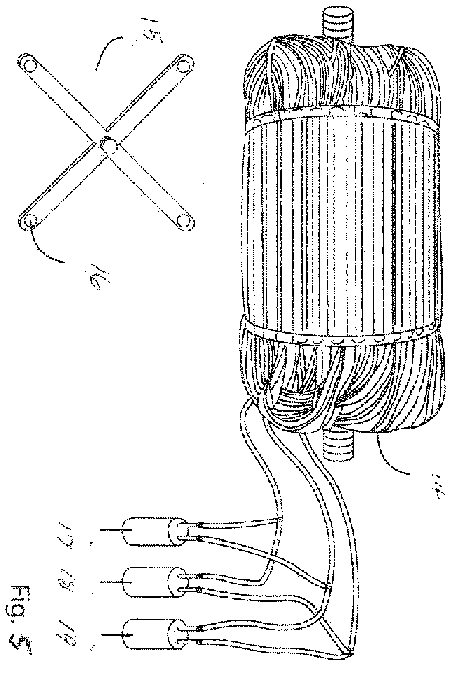

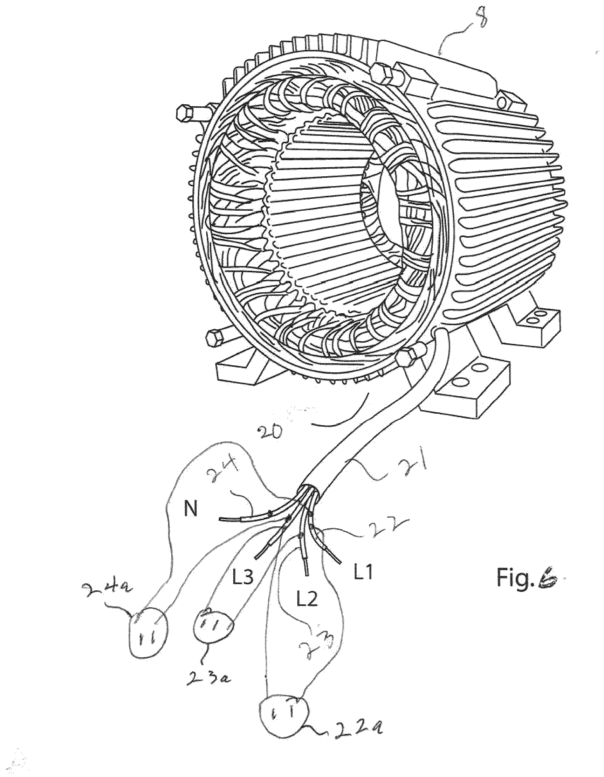

**FIGs. 3-6** provide illustrations of an assembly of the oscillator modulator 1. In particular, **FIG. 3** is an illustration of the stator of the oscillating modulator in-line power generator phase converter 8, fully wound with coils 9 and hooked up as a 4-pole 1800 rpm 3-phase 60Hz electric motor/generator. **FIG. 4** is an illustration of a modulator in-line power generator phase converter rotor 13, which slides in to a stator 7. The modulator rotor 13 is fastened in place on both ends by retaining bar 15 illustrated in **FIG. 5,** which also provides a side view of the rotor 14. The retention holes 16 in **FIG. 5** are configured to receive fastening members 10 illustrated in **FIG. 3.** In the exemplary embodiment, capacitors 17, 18 and 19 illustrated in **FIGs. 5** and **6** are attached across L1 - L2, L2 - L3 and (L1 - L3 as well as L1 - Neutral, L2 - Neutral and L3 - Neutral (not shown) but not limited to this arrangement.

The modulator in-line power generator phase converter operates by input 3-phase or single-phase from a utility or other power source. The input power rotates a four-pole magnetic field at 1800 rpm in the case of 60 Hz or 1500 rpm in the case of 50 Hz. The input power is connected to the 3-phase output terminal block in a wye or delta hookup. The output power is connected to the same terminal block as the input power. The input power excites the stator iron with spinning magnetic poles which in turn excites the inner rotor and induces spinning magnetic poles in the inner rotor iron which generates volts and amps in the rotor windings. The current flows into the capacitors as in FIG 5, 17 and 19. The capacitors feed back into the rotor coils which increase the magnetic flux in the rotor iron which further excites the stator coils and iron thereby increasing the output to an electric load. Each cycle of the magnetic poles of both the stator and rotor collapse and are excited again twice per cycle. The magnetic domains are repeatedly aligned and relaxed, thereby each cycle the unit pumps out four times more power than it takes to excite the coils with the input power. This mechanism allows the unit to magnify the power input up to four times more output than input. The capacitor arrangement across the leads the stator (FIG 6 22a, 23a and 24a) and rotor are of such power and arrangement to result in generation of sufficient reactive power to maintain a stable voltage to push the power to the load. The reactive power is ideally in the range of 5 Kvar to 10 Kvar but not limited to 5 Kvar to 10 Kvar.

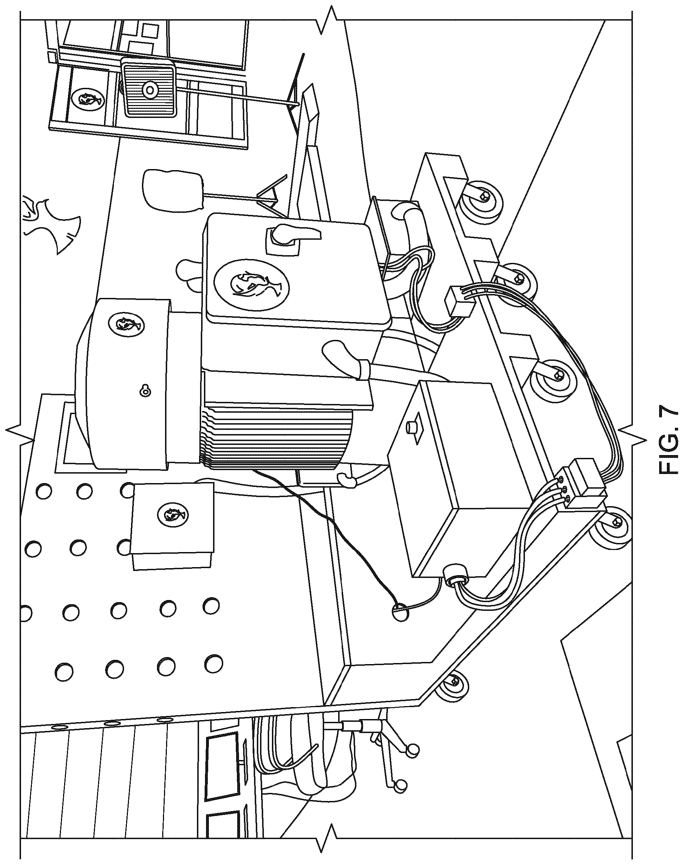

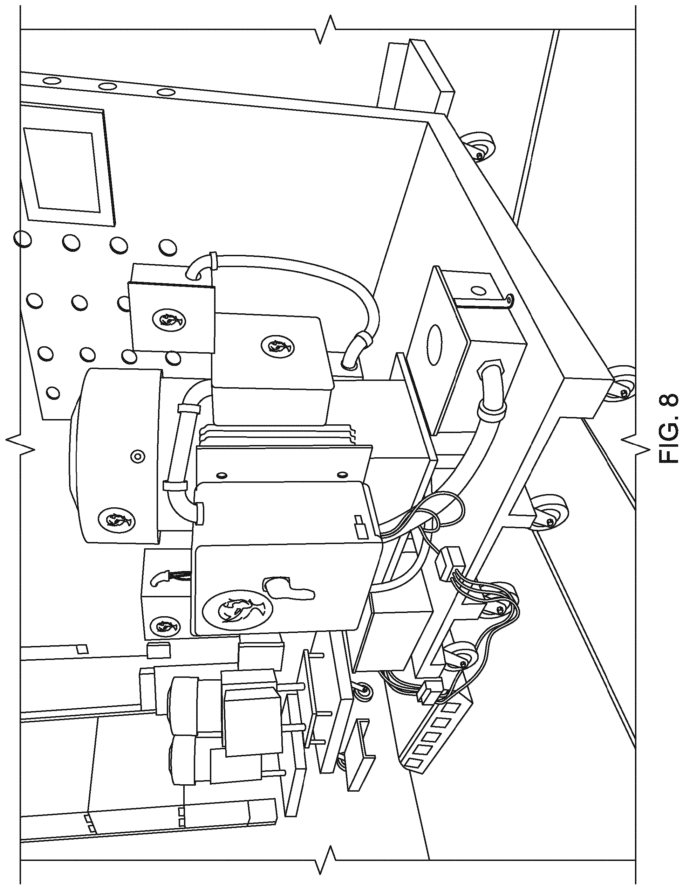

FIG 7 is a left oblique view depiction of the 75 kW in-line power generator of the present disclosure. The unit is depicted on the moving platform with capacitor boxes and control boxes. The 75 kW unit is further depicted in a right oblique view FIG 8 again revealing the support stand, the core unit along with capacitor boxes and control boxes.

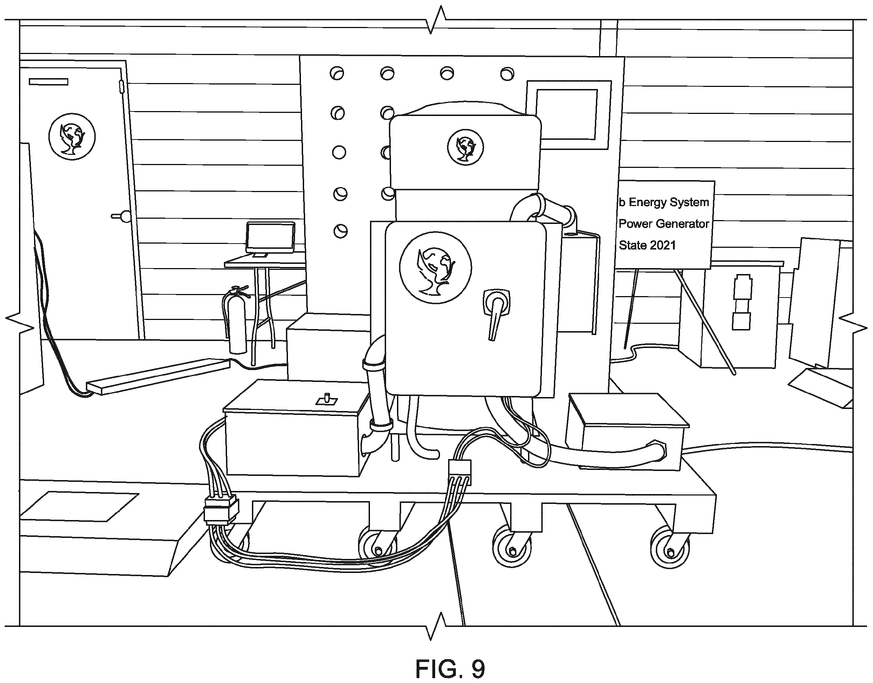

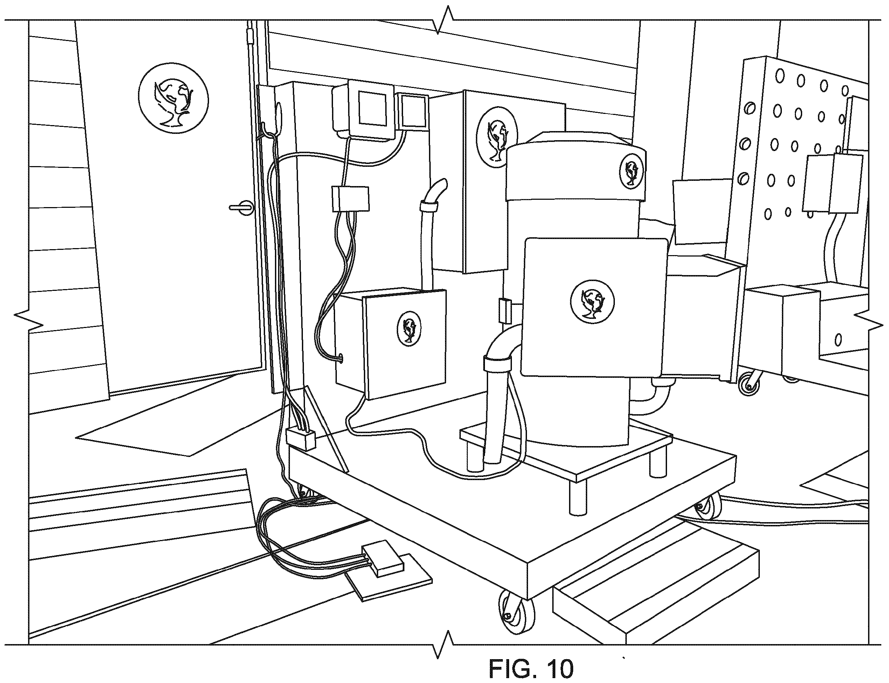

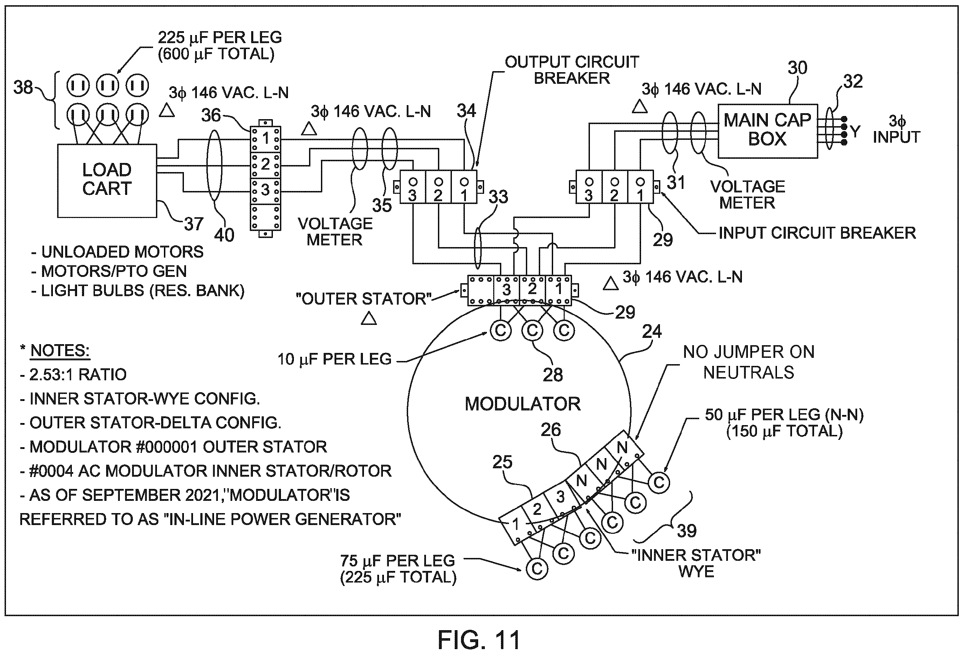

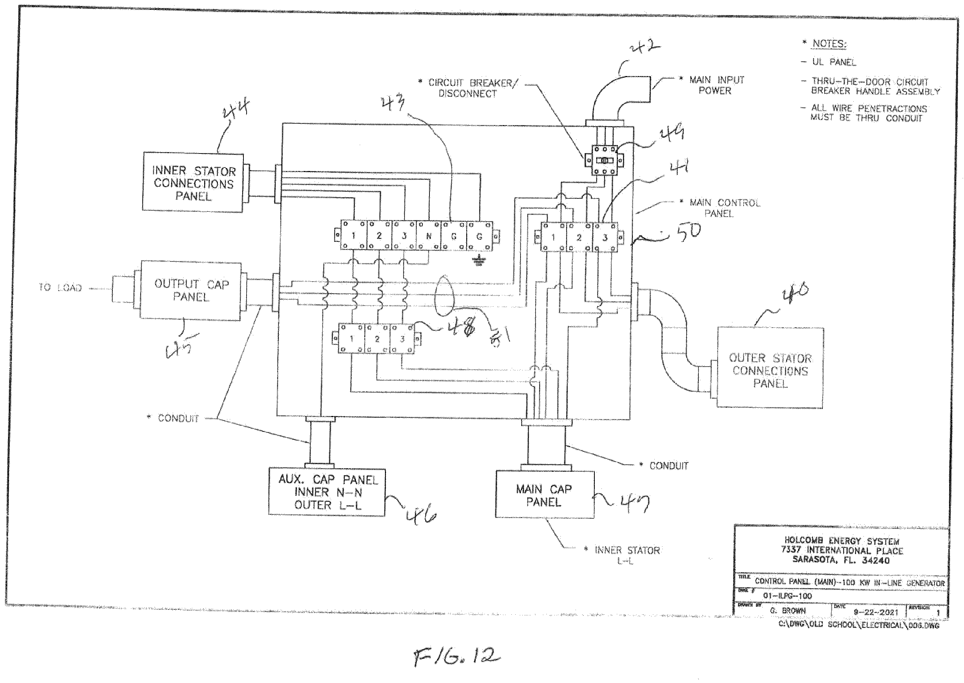

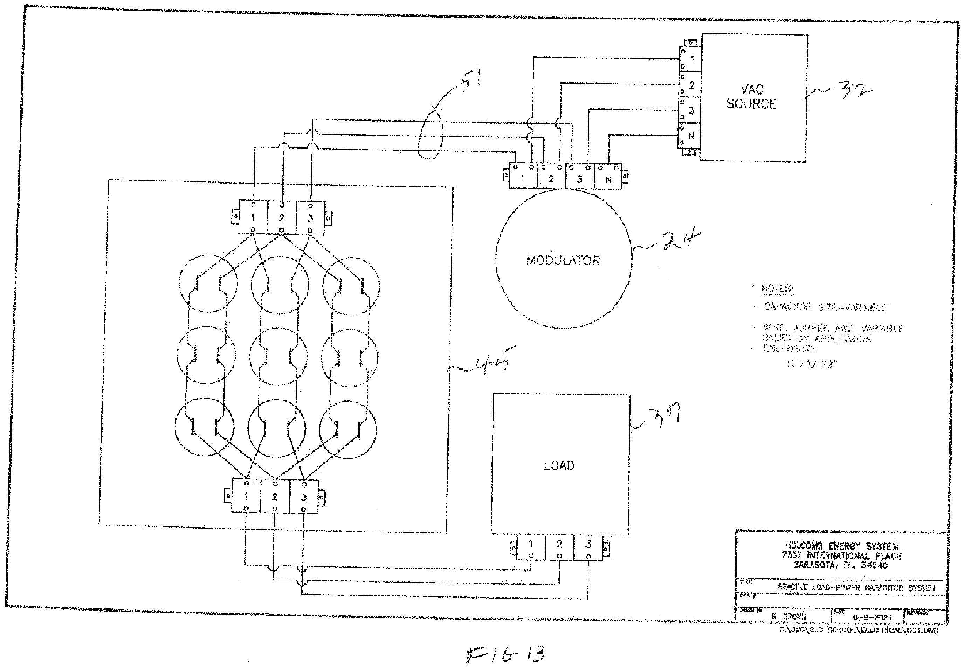

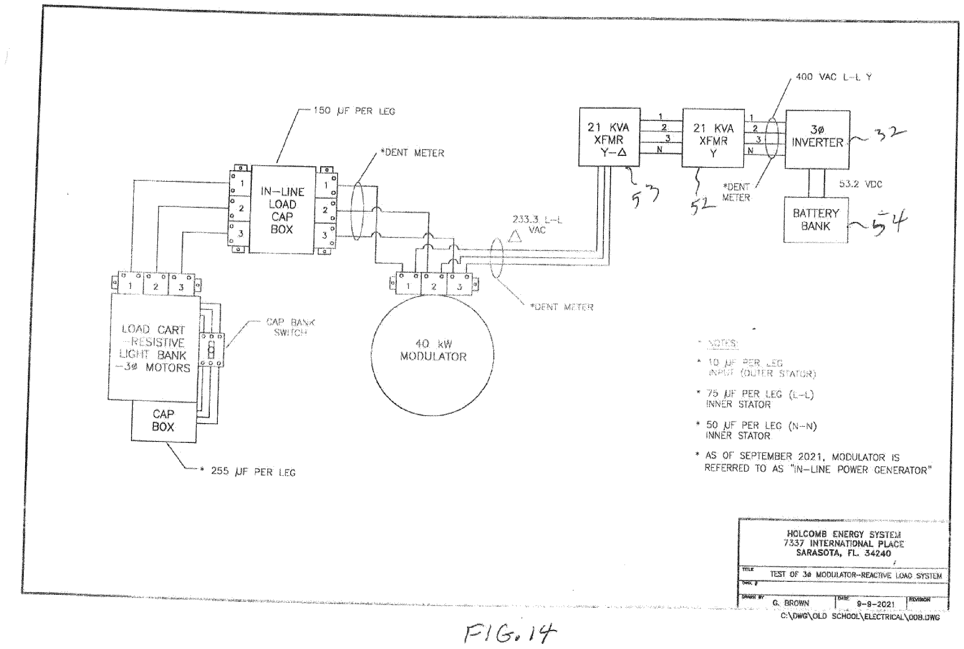

FIG 9 is a front-on view of the 75 kW in-line power generator again depicting the core unit along with the capacitor boxes and control boxes. Detailed wiring diagrams will be revealed in the following Figures. The 30 kW phase converter in-line power generator of the disclosure is depicted in a left oblique view in FIG 10 along with meters, control boxes and capacitor boxes. The phase converter in-line power generator of FIG 10 is useful as a phase converter power booster to convert single-phase or split-phase to 3-phase for use in 3-phase applications. It is also useful in boosting the power of split-phase service by transferring the energy from the third phase leg into the first and second phase legs by capacitor arrangement and sequencing. The 3-phase modulator in-line power generator wiring diagram is depicted in FIG 11. The input power from a utility or other source 32 lands in the main capacitor box 30. The capacitors here are in place to maintain a proper ratio of reactive power to true power to maintain voltage to the load. The 3-phase leads 31 are connected to the input circuit breaker 29 and then to the outer stator terminal 27 (phase 1, 2 and 3) of the outer stator 24. Capacitors 28 are placed across the leads of phase 1, 2 and 3. The inner rotor or stator not depicted in the drawing is connected in a wye or delta connection. The depiction in FIG 11, the inner stator or rotor is in a wye connection with appropriate capacitor connection 39 on the neutral leads. In the delta connection, the capacitors are only on the leads 1, 2 and 3. When the input power to block 27 is activated, the series of events progress as was earlier described in this section. The magnified power is fed out to the output circuit breaker 34 through conductors 33. The power then flows through conductors 35 to load circuit breaker 36 and into the load cart through conductor 40 onto load cart 37 which contains capacitor 38, loaded and unloaded motors as well as resistive load. A depiction of the main control panel 50 of the 75 kW (100 hp) in-line power generator is depicted in FIG 12. The 3-phase input circuit comes in through conduit 42 and connects to breaker 49. The circuit then goes to outer stator connection panel. The output to the load then travels through circuit 51 to output capacitor panel 45 and out to the load. Connections from the inner stator connection block goes to breaker 48 and connects with capacitors in the main capacitor panel. A detailed depiction of the output capacitor panel 45 is revealed in FIG 13. The current flows over the capacitors to the load. The output from the modulator in-line power generator 24 flows through conductor 51 through the output capacitors in capacitor box 45 onto 3-phase load 37. FIG 14 is a depiction of the test stand for testing the modulator in-line power generator and assessing the reactive power and true or real power.

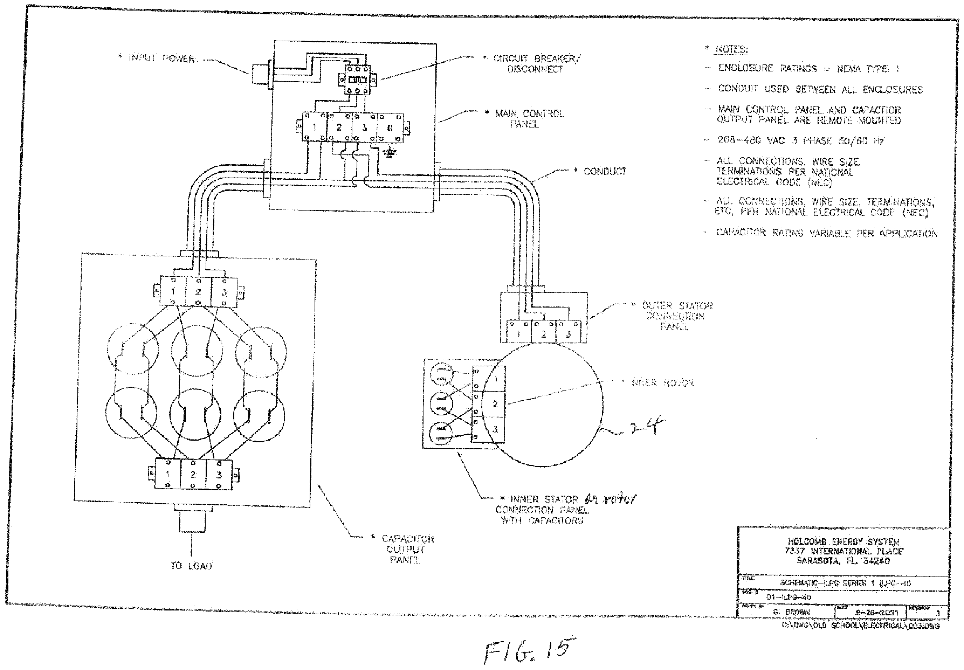

FIG 15 reveals the schematic of the in-line power generator wiring connections of the 35 kW unit as depicted in FIG 15.

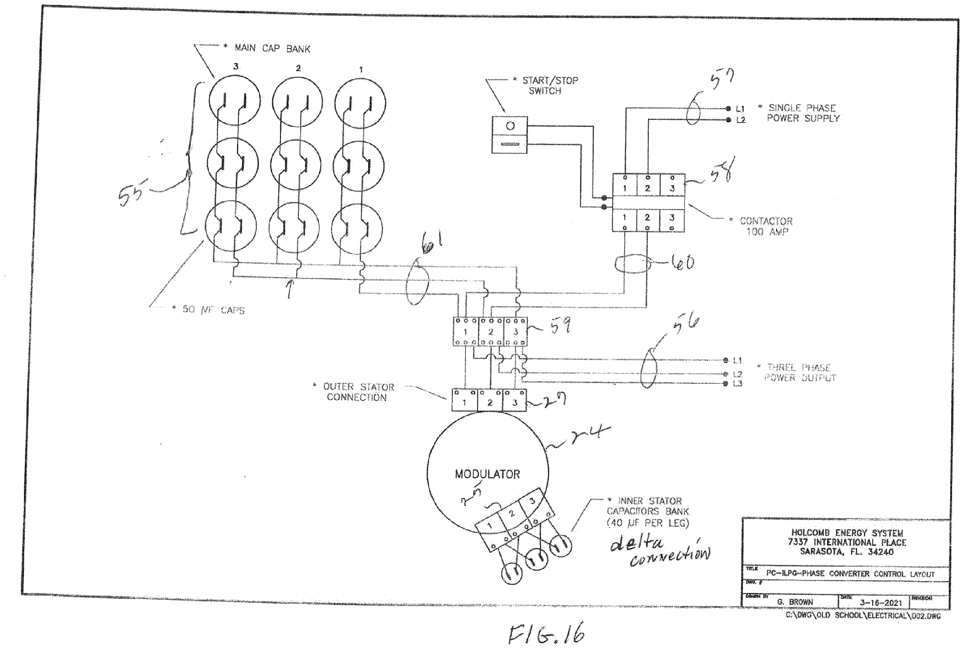

FIG 16 is a schematic depiction of the phase converter in-line power generator. This unit has split-phase input and 3-phase output. Split-phase is supplied by conductors 57 to single-phase terminal block 58, then through conductor 60 to 3-phase terminal block 59. Three phase legs are connected from block 59 to outside stator block of modulator 24. The generated phase leg 3 is powered from capacitor bank 55, capacitor rows 2 and 3 from phase 2 and capacitor row 1 from phase 1, the alternate side of the capacitor feeds power to the phase 3 generated leg. Additional power for phase 3 originates from the magnetic domains of the steel encasing the coils of phase 3. The output flows through conductors 56 to a load. The load is connected to all three legs of the 3-phase, but when the ultimate load is split-phase, power is transferred from phase 3 to split-phase by capacitors from the third leg to the first and second leg.

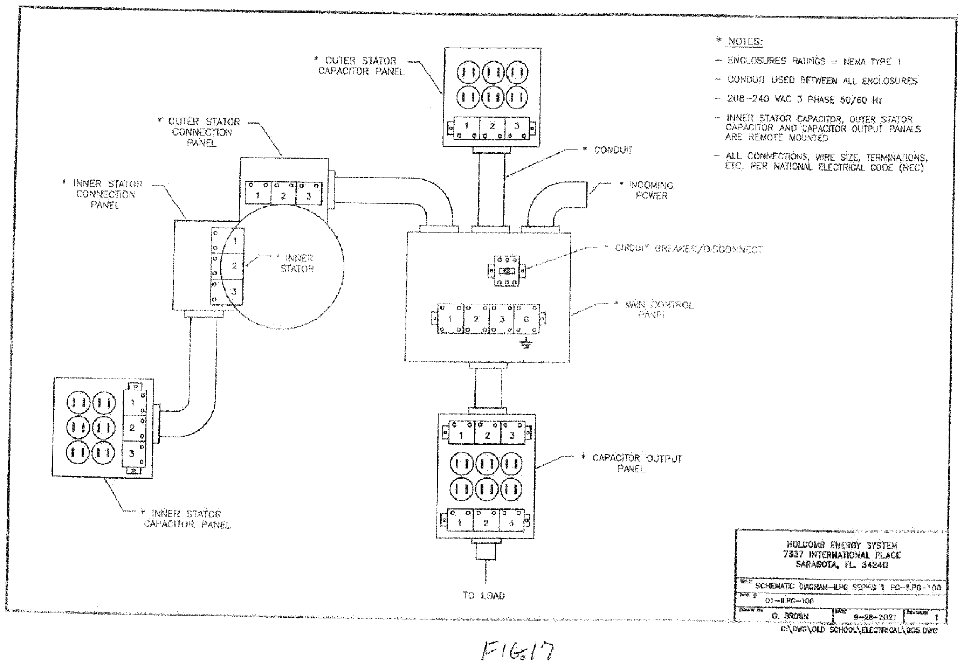

FIG 17 reveals a schematic diagram of the in-line power generator and the phase converter in-line power generator 100 hp (75 kW).

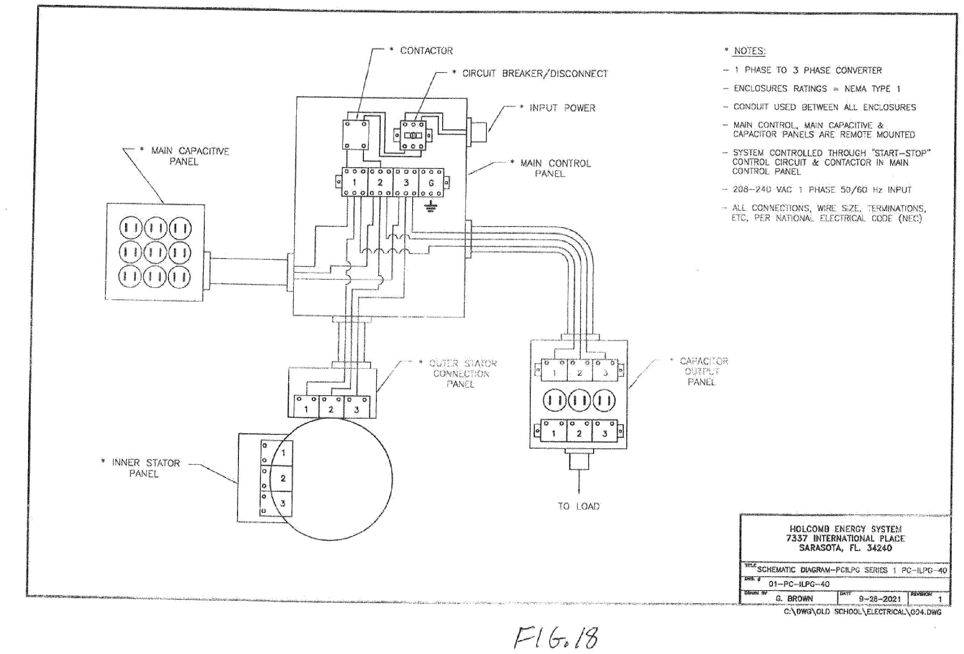

FIG 18 reveals a schematic diagram of the in-line power generator and the in-line power generator phase converter.

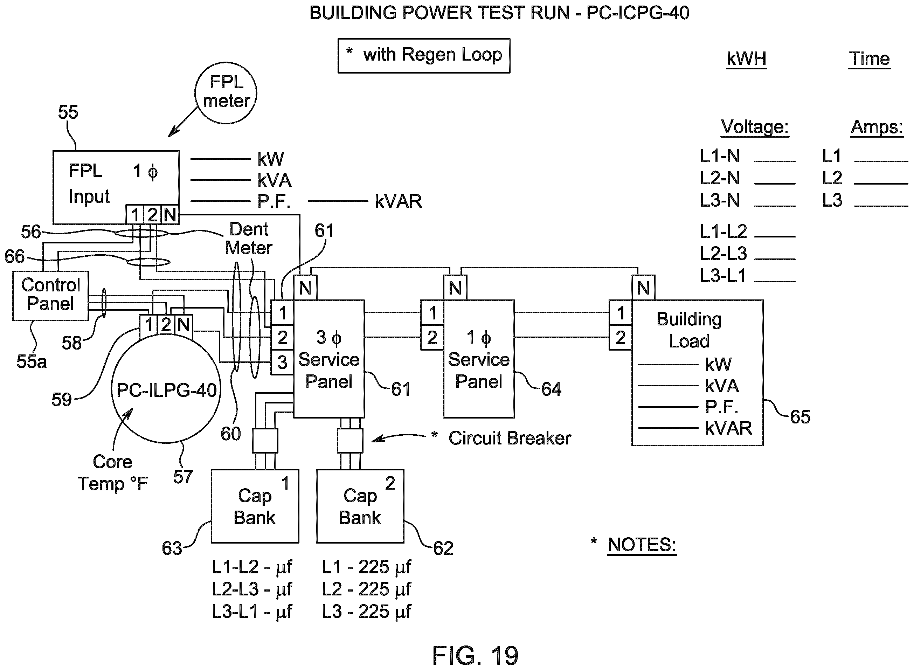

FIG 19 reveals a schematic diagram of the phase converter of the invention which is used to generate split-phase power from excitation by the grid or utility power. The unit is an in-line power generator, powered by electric power from the utility grid. Power comes in from FPL 55 through conduit 56 to control box 55a and through conductors 58 to terminal block 59 on the PC-ILPG-40 57. The power is generated inside the unit at a ratio of 2 to 4 times output versus input. Two power output circuits are demonstrated. Power goes to the building electric load through conductors 60 to service panel 61 then to service panel 64 and on to building load 65. The second circuit 60 goes from the output block 61 through circuit 66 back to the input block 56. The current flows back into the source and back to PC-ILPG-40 because the voltage of the output is 3 +/- 1 volt higher than the input voltage from FPL. This system allows use of energy from the source and it is then returned such that there is no net consumption of power from the electric power grid.

The above detailed description of embodiments of the disclosure is not intended to be exhaustive nor to limit the disclosure to the exact form disclosed. While specific examples for the disclosure are described above for illustrative purposes, those skilled in the relevant art will recognize various modifications are possible within the scope of the disclosure. For example, while processes and blocks have been demonstrated in a particular order, different implementations may perform routines or employ systems having blocks, in an alternate order, and some processes or blocks may be deleted, supplemented, added, moved, separated, combined, and/or modified to provide different combinations or sub-combinations. Each of these processes or blocks may be implemented in a variety of alternate ways. Also, while processes or blocks are at times shown as being performed in sequence, these processes or blocks may instead be performed or implemented in parallel or may be performed at different times. The results of processes or blocks may be also held in a non-persistent store as a method of increasing throughput and reducing processing requirements.

Further embodiments and aspects of the present disclosure may be characterised by the following clauses:

1. A solid-state electromagnetic stator and rotor (or inner stator), each comprising

a plurality of wound magnetic poles arranged around a supporting structure wherein a first end of the magnetic pole slots in attached to the support structure and a second end of each pole slot points outward away from the supporting structure, wherein in the poles include ferromagnetic and/or paramagnetic materials;

a plurality of wires wound around and through the pole slots; and an excitation circuit configured to provide a current to the wires according to a predefined sequence to align magnetic domains of the wound poles to produce a magnetic flux field, such that the current provided to the wires according to the predefined sequence provides a moving polar magnetic field from both the stator and rotor (or inner stator) in the form of distinct magnetic poles as needed to accomplish power generation, wherein the current for the polar excitation is provided by polyphase power fed into the terminals of the outer stator, the inner power induces rotation of a four-pole magnetic field at 1800 rpm in the case of 60 Hz or 1500 rpm in the case of 50 Hz, whereby the spinning four magnetic poles excites the outer stator iron and the inner rotor (inner stator) and windings, the windings store the energy in capacitors and feed back into the inner rotor coils which magnifies the power fed back to the outer stator coils and out to an electric load, wherein the field strength of the moving polar magnetic field is proportional to the density of the magnetic domains of the pole piece material of the outer stator and inner rotor (inner stator).

2. The solid-state electromagnetic stator and rotor of clause 1, wherein the plurality of the electromagnetic poles are divided into N-groups, and the magnetic poles within each group are configured to be sequentially excited by the 50 Hz or 60 Hz 3-phase or single-phase input to achieve a target frequency of an excitation cycle.

3. A power generator comprising a solid-state electromagnetic stator and solid-state electromagnetic rotor (inner stator) of any of the preceding clauses and further comprising:

an electric power generator stator having a stator housing; and

wherein the solid-state electromagnetic rotor (inner stator) is disposed in, or around, and attached to the stator housing, such that the magnetic flux field generated the solid-state electromagnetic stator excites the solid-state electromagnetic rotor (inner stator) and produces electricity in both, the current flowing in the rotor (inner stator) and stator coils aligns the magnetic domains, relaxes and realigns;

wherein the action functions as an electron pump generating additional electricity which flows out to an electric load through the stator terminal block, thereby putting out 2-3 times more power than the input.

4. The power generator of clause 3, wherein the stator further comprises a cavity or radial surface and further comprising stator wires configured to direct power to an output point.

5. The power generator of clause 3 or clause 4, wherein the cavity of the stator is configured to receive the solid-state electromagnetic rotor (inner stator).

6. The power generator of clauses 3-5, wherein the stator housing comprises a motor stator housing.

7. The power generator of clauses 3-6, wherein the electric motor stator housing comprises a four-pole electric motor stator housing, but not limited to four-poles.

8. The power generator of clauses 3-7, wherein the four-pole electric motor stator housing comprises a rotor insert, wherein the rotor insert is wound with conductors and the winding pattern of a four-pole generator, but not limited to four-poles.

9. The in-line power generator of clauses 3-8, wherein the four-pole electric stator housing comprises a motor stator winding with a four-pole motor winding pattern, but not limited to four poles.

10. The in-line power generator of clauses 3-9, wherein the four-pole electric motor stator housing comprises slots for a motor stator winding with a four-pole motor winding pattern, but not limited to four poles.

11. The in-line power generator of clauses 3-10, wherein the motor stator winding is connected in the pattern of a four-pole electric motor, connected either in a "wye" or "delta" connection.

12. The in-line power generator of clauses 3-11, wherein the four-pole electric motor configured to generate a four-pole rotating magnetic field at a predetermined frequency.

13. The in-line power generator of clauses 3-12, wherein the predefined frequency is 1800 rpms for 60 Hz power from the in-line power generator and 1500 rpm for 50 Hz power from the in-line power generator.

14. The in-line power generator of clauses 3-13, wherein the four-pole rotating magnetic field generates 3-phase voltage in the rotor insert.

15. The in-line power generator of clauses 3-14, further comprising an oscillating modulator effect for stabilizing voltage and power output of the power generator, said oscillating modulator comprising:
the four-pole electric motor stator housing containing the rotor insert, wherein the rotor insert is wound with conductors in the winding pattern of a four-pole generator, connected in either a "high-wye" hookup, a "low-wye" hookup or a "delta" hookup.

16. The in-line power generator of clauses 3-15, wherein the leads from the rotor (inner stator) hookup of the oscillating modulator assembly are connected with a plurality of capacitors; and the motor stator terminals are connected to a three-phase power input and a three-phase power output to an electric load; and a unique series of capacitors across the rotor leads and the motor-stator leads provides reactive power to support output voltage to the load. That reactive power being in the range of 5 Kvar to 10 Kvar but not limited to 5 Kvar to 10 Kvar.

17. The in-line power generator of clauses 3-16, wherein the input power from any source is magnified by greater than 200% and delivered to an electric load.

18. The in-line power generator of clauses 3-17, wherein the 3-phase voltage and current from the rotor (inner stator) oscillates into and out of the capacitors across the leads, thereby stabilizing and increasing the power output of the in-line power generator.

19. The in-line power generator of clauses 3-18, wherein the true power magnification effect comes from energy harvested from the magnetic domains of the ferromagnetic material from which it is constructed.

20. The in-line power generator of clauses 3-19, wherein the magnetic domains of the ferromagnetic material of the structure are generated by the electron spin of the unpaired electrons of the electrical steel or other paramagnetic or ferromagnetic material.

21. The phase converter in-line power generator of clauses 3-20, wherein the power input is 3-phase or single-phase from utility or alternative power source.

22. The phase converter in-line power generator of clauses 3-21, wherein the input power rotates a four-pole magnetic field at 1800 rpm in the case of 60 Hz or 1500 rpm in the case of 50 Hz. The two (2) input power leads are connected to the three-phase output terminal block in a "wye" or "delta" hookup. The output power is connected to the same terminal block as the input power.

23. The phase converter in-line power generator of clauses 3-22, wherein the input power excites the stator iron with spinning magnetic poles which in turn excites the inner rotor (inner stator) and induces spinning magnetic poles in the rotor iron which generates volts and amps in the rotor windings. The current flows into the capacitors and the capacitors feed back into the rotor coils which increases the magnetic flux in the rotor iron which further excites the stator coils and iron thereby increasing the output to an electric load.

24. The phase converter in-line power generator of clauses 3-23, wherein each cycle of the magnetic poles of both the stator and rotor collapse and are excited again twice per cycle.

25. The phase converter in-line power generator of clauses 3-24, wherein each cycle of the magnetic domains are repeatedly aligned and relaxed, thereby each cycle the unit pumps out four times more power than it takes to excite the coils with the input power.

26. The phase converter in-line power generator of clauses 3-25, wherein the unit magnifies the power input up to four times more output than input and generates a third phase leg thereby converting single phase or split phase power to three-phase power.

27. The in-line power generator of clauses 3-26, wherein graphene with side chains containing unpaired electrons laminated with carbon fibre laminates in the construction of stator and rotor laminates for super lightweight self-sustaining power generators, and/or power magnifiers.

28. The in-line power generator of clauses 3-27, wherein the unit magnifies the power output up to 4 times more than the power input, thereby allowing the generator to feed power back to the source at a higher voltage and thereby set up a self-sustaining power loop and consume no net power from the electric power grid, therefore the power grid serves merely as an interface.

**Claims**

1. A solid-state electromagnetic generator assembly comprising a stator and a rotor, wherein the stator and the rotor each comprise:

   a plurality of pole pieces integrally formed from a supporting structure comprising electrical steel, wherein a first end of each pole piece is attached to the supporting structure and a second end of each pole piece points outward away from the supporting structure, wherein the pole pieces include ferromagnetic and/or paramagnetic materials;
   a plurality of wires wound around each pole piece; and
   an excitation circuit configured to provide a current to the wires according to a predefined sequence to align magnetic domains of the wound pole pieces to produce a magnetic flux field, such that the current provided to the wires according to the predefined sequence provides a moving polar magnetic field in the form of distinct magnetic poles as needed to accomplish power generation, wherein the wires are configured to direct energy generated to capacitors for storage therein and to feed the energy back into the wires wrapped around the pole pieces of the rotor which magnifies the power fed back to the outer wires wrapped around the pole pieces of the stator and out to an electric load, and wherein the field strength of the moving polar magnetic field is proportional to the density of the magnetic domains of the pole piece material of the stator and the rotor; wherein the current for the excitation circuit is provided by polyphase power fed into the terminals of the stator from a utility or alternative power source, and the polyphase power induces rotation of a four-pole magnetic field, whereby the spinning four magnetic poles excite the pole pieces of the stator and the rotor and the wires.

2. The solid-state electromagnetic generator assembly of claim 1, wherein the output amperage is more than double the input amperage due to a decrease in impedance of the circuit coils secondary to the interacting magnetic fields of the stator and rotor.

3. The solid-state electromagnetic generator assembly of claim 1 or claim 2, wherein the capacitors are arranged across the leads of the stator and the rotor such that sufficient reactive power is generated to maintain a stable voltage to push the energy generated to the electrical load.

4. The solid-state electromagnetic generator assembly of claims 1-3, wherein the stator and the rotor comprise laminates comprising graphene with side chains containing unpaired electrons laminated with carbon fibre laminates.

5. A power generator comprising the solid-state electromagnetic generator assembly of any of the preceding claims, and further comprising:

   an electric power generator stator having a stator housing; and
   wherein the solid-state electromagnetic rotor is disposed in or around the stator housing, and is attached to the stator housing, such that the magnetic flux field generated by the solid-state electromagnetic stator excites the solid-state electromagnetic rotor and produces electricity in both and the resulting current flowing in the wires wrapped around the pole pieces of the rotor and stator align the magnetic domains of the pole piece material in both the stator and the rotor;
   wherein the action of the generator functions as an electron pump generating additional electricity which flows out to an electric load through the stator terminal block, thereby putting out multiple times more power than the input.

6. The in-line power generator of claim 5, wherein the four-pole rotating magnetic field generates 3-phase voltage in the rotor insert.

7. The in-line power generator of claim 5 or claim 6, further comprising an oscillating modulator for stabilizing voltage and increasing power output of the power generator, said oscillating modulator comprising:
   the stator housing containing the rotor insert, wherein the stator housing comprises a four-pole electric motor stator housing but not limited to four poles, and wherein the rotor insert is wound with conductors in the winding pattern of a four-pole generator, connected in either a "high-wye" hookup, a "low-wye" hookup or a "delta" hookup.

8. The power generator of any of claim 7, wherein leads from the rotor hook-up of the oscillating modulator are connected with a plurality of capacitors; and terminals of the motor stator are connected to a three-phase power input and a three-phase power output to an electric load; and a series of capacitors across the rotor leads and the motor-stator leads provides reactive power to support output voltage to the load.

9. The power generator of claim 8, wherein the reactive power provided by the arrangement of the capacitors is in the range of 5 Kvar to 10 Kvar.

10. The in-line power generator of claims 5-9, wherein the 3-phase voltage and current from the rotor (inner stator) oscillates into and out of the capacitors across the leads, thereby stabilizing and increasing the power output of the in-line power generator.

11. The in-line power generator of claims 5-10, wherein the power magnification effect comes from energy harvested from the magnetic domains of the ferromagnetic material from which it is constructed at the same instant of lowering the circuit impedance.

**12.** The power generator of claims 5-12, wherein the input power rotates a four-pole magnetic field at 1800 rpm in the case of 60 Hz or 1500 rpm in the case of 50 Hz, wherein the two input power leads are connected to the three-phase output terminal block in a "wye" or "delta" hookup, and the output power is connected to the same terminal block as the input power.

**13.** The power generator of claims 5-12, wherein the input power excites the pole piece material of the stator with spinning magnetic poles which in turn excite the rotor and induces spinning magnetic poles in the pole piece material of the rotor which generates a current in the wire wound around the rotor, and the wires are configured such that the current induced in the wires flows into the capacitors and the capacitors feed back into the wires wrapped around the rotor which increases the magnetic flux in the pole piece material of the rotor which further excites the wires wrapped around the stator and the pole piece material of the stator thereby increasing the output to an electric load by increasing the amperage output and maintaining a stable voltage.

**14.** The power generator of claims 4-13, wherein the magnetic poles of both the stator and the rotor relax and are excited again twice per cycle; and/or

wherein the magnetic domains are repeatedly aligned and relaxed in a cyclic fashion, thereby each cycle the generator generates four times more power than it takes to excite the wires with the input power; and/or
wherein the unit magnifies the power input up to four times more output than input and generates a third phase leg thereby converting single phase or split phase power to three-phase power.

**15.** The power generator of claims 5-14, wherein the source of power for the generator is an electric power grid, wherein the generator magnifies the power output up to 4 times more than the power input, thereby allowing the generator to feed power back to the source at a higher voltage and thereby set up a self-sustaining power loop and consume no net power from the electric power grid, such that the power grid serves merely as an interface.

Phase #1
Phase #2
Phase #3

Fig. 1

Figure 2

Phase U - (1)
Phase V - (2)
Phase W - (3)

EP 4 199 330 A1

Fig. 3

Fig. 4

Fig. 5

Fig. 6

FIG. 7

FIG. 8

FIG. 9

FIG. 10

FIG. 11

225 μF PER LEG
(600 μF TOTAL)

38

3φ 146 VAC. L-N

OUTPUT CIRCUIT
BREAKER

30

32

3φ 146 VAC. L-N

MAIN CAP
BOX

3φ
Y    INPUT

36

3φ 146 VAC. L-N

34

LOAD
CART

1
2
3

31

VOLTAGE
METER

INPUT CIRCUIT BREAKER

37    40

VOLTAGE
METER

35

3     2     1

33

3     2     1

29

- UNLOADED MOTORS
- MOTORS/PTO GEN
- LIGHT BULBS (RES. BANK)

"OUTER STATOR"

3φ 146 VAC. L-N

29

10 μF PER LEG

24

28

NO JUMPER ON
NEUTRALS

* NOTES:
- 2.53:1 RATIO
- INNER STATOR-WYE CONFIG.
- OUTER STATOR-DELTA CONFIG.
- MODULATOR #000001 OUTER STATOR
- #0004 AC MODULATOR INNER STATOR/ROTOR
- AS OF SEPTEMBER 2021,"MODULATOR"IS
REFERRED TO AS "IN-LINE POWER GENERATOR"

MODULATOR

26

25

50 μF PER LEG (N-N)
(150 μF TOTAL)

N  N  N

1  2  3

C
C
C
C
C

C

39

"INNER STATOR"
WYE

75 μF PER LEG
(225 μF TOTAL)

EP 4 199 330 A1

FIG. 12

FIG 13

FIG. 14

NOTES:

* 10 µF PER LEG
  INPUT (OUTER STATOR)

* 75 µF PER LEG (L–L)
  INNER STATOR

* 50 µF PER LEG (N–N)
  INNER STATOR

* AS OF SEPTEMBER 2021, MODULATOR IS
  REFERRED TO AS "IN-LINE POWER GENERATOR"

HOLCOMB ENERGY SYSTEM
7337 INTERNATIONAL PLACE
SARASOTA, FL. 34240

TITLE    TEST OF 3ø MODULATOR–REACTIVE LOAD SYSTEM

DRAWN BY    G. BROWN    DATE 9-9-2021    REVISION

C:\DWG\OLD SCHOOL\ELECTRICAL\008.DWG

FIG. 15

EP 4 199 330 A1

FIG. 16

30

FIG.17

FIG. 18

# BUILDING POWER TEST RUN - PC-ICPG-40

| | kWH | Time |
|---|---|---|
| | | |

**Voltage:**    **Amps:**

| | | |
|---|---|---|
| L1-N _____ | L1 _____ |
| L2-N _____ | L2 _____ |
| L3-N _____ | L3 _____ |
| | |
| L1-L2 _____ | |
| L2-L3 _____ | |
| L3-L1 _____ | |

FPL meter

55

FPL 1 φ Input

1 2 N

56

66

Control Panel

55a

58

59

PC-ILPG-40

Core Temp °F

57

Dent Meter

60

61

N

1
2
3

3 φ Service Panel

61

N

1
2

1 φ Service Panel

64

N

1
2

Building Load

_____ kW
_____ kVA
_____ P.F.
_____ kVAR

65

kW
kVA
P.F. — kVAR

* with Regen Loop

* Circuit Breaker

Cap Bank 1

63

L1-L2 - μf
L2-L3 - μf
L3-L1 - μf

Cap Bank 2

62

L1 - 225 μf
L2 - 225 μf
L3 - 225 μf

* NOTES:

## FIG. 19

Europäisches Patentamt

European Patent Office

Office européen des brevets

# EUROPEAN SEARCH REPORT

Application Number

EP 21 21 5888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2021/063522 A1 (HOLCOMB SCIENT RESEARCH LTD [IE]) 8 April 2021 (2021-04-08) * the whole document * | 1-15 | INV. H02K53/00 ADD. H02K16/00 H02K99/00 H02N11/00 |

TECHNICAL FIELDS SEARCHED (IPC)

H02K
H02N

The present search report has been drawn up for all claims

| Place of search | Date of completion of the search | Examiner |
|---|---|---|
| The Hague | 31 May 2022 | Georgopoulos, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 5888

31-05-2022

| Patent document cited in search report | | Publication date | Patent family member(s) | | Publication date |
|---|---|---|---|---|---|
| WO 2021063522 | A1 | 08-04-2021 | AU | 2019468559 A1 | 26-05-2022 |
| | | | CA | 3152928 A1 | 08-04-2021 |
| | | | WO | 2021063522 A1 | 08-04-2021 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2019076967 W